Europäisches Patentamt

European Patent Office

Office européen des brevets

(11) Veröffentlichungsnummer: **0 214 390**

**A1**

(12) # EUROPÄISCHE PATENTANMELDUNG

(21) Anmeldenummer: **86108767.4**

(22) Anmeldetag: **27.06.86**

(51) Int. Cl.4: **G06F 1/00** , **G11C 7/00**

(30) Priorität: **12.07.85 DE 3525017**

(43) Veröffentlichungstag der Anmeldung:
**18.03.87 Patentblatt 87/12**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Schrenk, Hartmut, Dr. Phys.**
**Fasanenweg 22**
**D-8013 Haar(DE)**

(54) **Freigabeverfahren für einen zugriffskontrollierten Anwenderspeicher und Anordnung zur Durchführung des Verfahrens.**

(57) Für bestimmte Anwendungen, beispielsweise für Chipkarten, verfügen integrierte Schaltungen über eine Sicherheitslogik, die bestimmte Speicher-Benutzerfunktionen wie Auslesen, Schreiben, Löschen oder Vergleichen von der Anwendung eines chipinternen Datenvergleichs mit extern einzugebenden Codedaten und nichtflüchtig im Speicher abgelegten Referenzdaten abhängig macht. Der Erfindung liegt die Aufgabe zugrunde, jede Anwendung dieses Geheimcodes erkennbar zu machen, um unberechtigte Zugriffe zu erkennen beziehungsweise zu verhindern. Erfindungsgemäß wird jede Freigabeprozedur von einer zwangsweisen Programmierung eines Kontrollspeichers abhängig gemacht.

EP 0 214 390 A1

## Freigabeverfahren für einen zugriffskontrollierten Anwenderspeicher und Anordnung zur Durchführung des Verfahrens

Verfahren zum Durchführen einer Freigabeoperation für einen Anwenderspeicher, in welcher eine Freigabe einer Benutzerfunktion von vorhergehenden Datenvergleich von extern eingegebenen Daten mit in einem Codespeicher abgelegten Referenzdaten abhängig gemacht wird. Die Erfindung betrifft ferner eine Anordnung zur Durchführung des Verfahren.

Integrierte Schaltungen mit einem nichtflüchtigen Speicher vom EPROM oder EPROM-Typ werden bekanntlich auf Chipkarten eingesetzt. Als Schutz gegen einen Mißbrauch der Chipkarten verfügen sie häufig über eine Sicherheitslogik, die bestimmte Benutzerfunktionen wie Auslesen, Schreiben, Löschen oder Vergleichen des Speicherinhalts von der Anwendung eines chipinternen Datenvergleichs zwischen nichtflüchtig im Speicher abgelegten Referenzdaten mit geheimen Codedaten abhängig macht, die von einem Benutzer an einem Terminal einzugeben sind. Es ist in vielen Fällen erwünscht, aus Sicherheitsgründen jede Anwendung dieses Geheimcodes erkennbar zu machen, um auch im Falle eines Verrats oder Mißbrauchs des Geheimcodes die Kontrolle über den Speicherzugriff zu behalten. Dadurch ist es möglich, eine unberechtigte Benutzung zu erkennen und die Anzahl unbefugter Benutzungsversuche zu begrenzen.

Aus der DE-OS 33 15 047 ist ferner eine derartige integrierte Schaltung bekannt, bei welcher das Löschen eines E²-PROM-Speicherbereiches nichtflüchtig und stets erkennbar in einem nichtflüchtig registrierenden Zähler abgelegt bleibt.

Obwohl mit diesen bekannten Maßnahmen die Sicherheit für eine Chipkarte beträchtlich erhöht wird, ist dennoch nicht jeder Mißbrauch der Chipkarte verhinderbar.

Der Erfindung lag daher die Aufgabe zugrunde, die Anwendung für eine integrierte Schaltung der oben genannten Art weiter zu verbessern.

Diese Aufgabe wird mit den kennzeichnenden Merkmalen der Ansprüche 1 bzw. 4 gelöst.

Die Erfindung beruht auf einer chipinternen Kontrolleinheit, die jede Anwendung eines Geheimcodes zum Zweck des Auslesens, des Schreibens oder des Löschens nichtflüchtig in einem Teil des Speichers registriert. Diese Registrierung kann in einer Weise erfolgen, daß entweder jeder Datenvergleich, also einschließlich möglicher Fehlversuche registriert wird oder daß nur jeder positiv abgelaufene Datenvergleich festgehalten wird.

Im einfachsten Fall besteht die Kontrolleinheit aus einem Speicherbereich, in dem ein Datenvergleich nach dem Schreiben eines einzelnen Bits kontrollierbar ist. Es kann jedoch auch jeder andere nichtflüchtige und chipintern festgelegte Speichermodus mit Zählfunktion angewendet werden.

Wenn sichergestellt werden soll, daß eine Benutzung des Codes auf keinen Fall unbemerkt bleiben soll, so darf der nichtflüchtige Kontrollzählspeicher unter keinen Umständen löschbar sein. Andererseits ist in manchen Fällen jedoch auch wünschenswert, einen vollständig beschriebenen Kontrollbereich wieder zu löschen, um beispielsweise die Chipkarte weiter verwenden zu können. In diesem Fall kann das Löschen des Kontrollspeichers wiederum von der Anwendung eines zweiten Geheimcodes abhängig gemacht werden, der als Systemcode auf jeden Fall sicher geheimzuhalten ist. Für eine derartige Anwendung sind beispielsweise zwei erfindungsgemäße Anordnungen in einem Chip hintereinander geschaltet.

Weiterbildungen der Erfindung sind in den Unteransprüchen niedergelegt.

Im folgenden wird die Erfindung anhand eines in den Figuren 1 bis 3 dargestellten Ausführungsbeispieles weiter beschrieben.

Fig. 1 zeigt eine Anordnung zum Erzeugen eines Freigabesignals,

Fig. 2 zeigt schematisch eine Anordnung, in welche die Anordnung nach Fig. 1 funktionsmäßig integriert ist, und

Fig. 3 zeigt schematisch den Signal-und Zeitverlauf wesentlicher Signale und Operation der Anordnung gemäß Fig. 1 und 2.

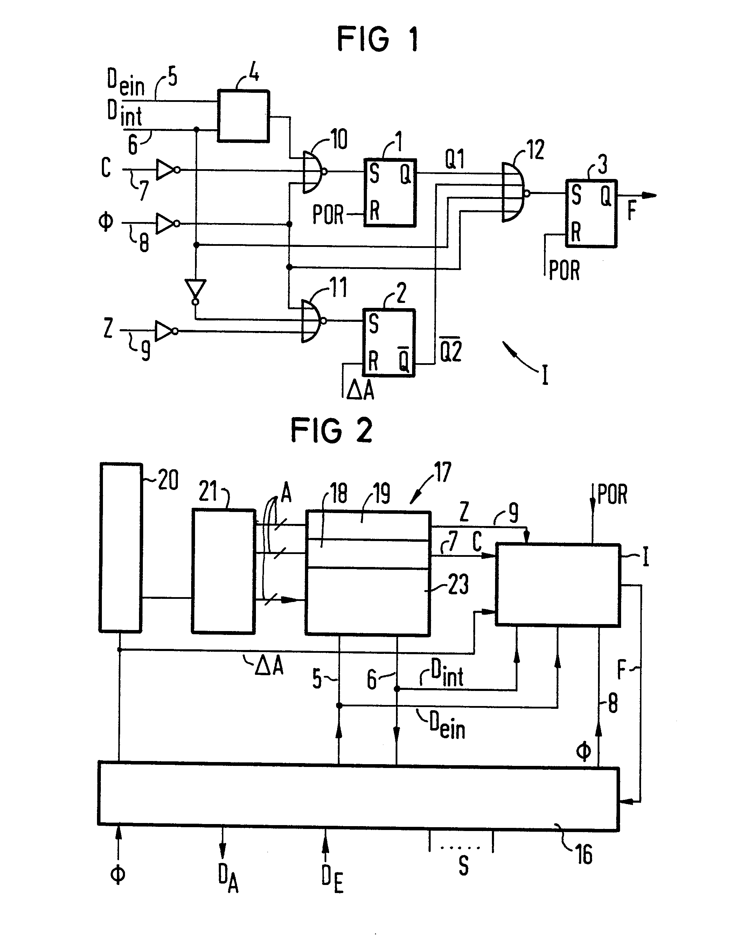

Eine Anordnung I in Fig. 1 weist ein Code-Flip-Flop 1, ein Bit-Flip-Flop 2 und ein Freigabe-Flip-Flop 3 jeweils vom RS-Typ sowie eine Komparatorlogik 4 auf. Das Ausführungsbeispiel ist so festgelegt, daß ein bitweiser Datenvergleich zwischen extern eingegebenen Daten und intern abgespeicherten Vergleichsdaten stattfindet. Des weiteren ist ein das Kontrollergebnis aufnehmender Kontrollspeicher als Zähler ausgebildet, bei welchem eine vorgegebene Anzahl von Speicherzellen bitweise vom log.1-zum log.0-Zustand geändert werden. Ein log.1-Zustand bedeutet, daß die betreffende Zählerstelle frei beziehungsweise gelöscht ist, während ein log.0-Zustand anzeigt, daß die Zählerstelle verbraucht beziehungsweise beschrieben ist.

Auf einer Datenleitung 5 liegen extern eingegebene Daten $D_{ein}$ an, die von einem Benutzer über ein Terminal eingegeben sind. Diese werden mit intern abgespeicherten Daten $D_{int}$, die auf einer

Leitung 6 anliegen, in der Komparatorlogik 4 verglichen. Auf der Leitung 6 liegt ferner alternativ -wie in einem der folgenden Abschnitte beschrieben - auch der Inhalt des Zählers an. Die Eingangsleitung 7 ist mit einem Code-Adreßsignal C beaufschlagt, das bei einer gültigen Codeadresse auf log. 1 steht. An Leitung 8 ist zur Synchronisierung ein von einer Ablaufsteuerung abgeleitetes Taktsignal $\Phi$ abgreifbar, das im log.1-Zustand die gültigen Bewertungszeitpunkte festlegt. Ein Kontrollsignal Z nimmt auf einer Leitung 9 einen log.1-Zustand an, wenn die Adresse des Kontrollspeichers beziehungsweise Zählbereichs eingestellt ist.

Die Funktion der Anordnung besteht darin, nur dann ein ausgangsseitiges Freigabesignal F zu erzeugen, wenn sowohl ein eingegebenes Codewort - (auf Leitung 5 ) mit einem abgespeicherten Referenzwort (auf Leitung 6) bitweise übereinstimmt, wenn der als Zähler wirkende Kontrollspeicher adressiert ist, was über Leitung 9 registriert wird, wenn der Zähler anfänglich noch nicht seinen Endstand erreicht hat, und schließlich, wenn ein Registriervorgang stattgefunden hat.

Um diese logische Verknüpfung zu erreichen, sind der Ausgang des Komparators 4 und die Leitung 7 über ein erstes NOR-Gatter 10 auf den Setzeingang des Code-Flip-Flops 1 gelegt. Leitung 6 ist ferner über einen Inverter zusammen mit Leitung 9 über ein zweites NOR-Gatter 11 auf den Setzeingang des Bit-Flip-Flops 2 gelegt. Ferner ist die Leitung 6 zusammen mit dem Q-Ausgang des Code-Flip-Flops 1 und mit dem Q-Querausgang des Bit-Flip-Flops 2 über ein drittes NOR-Gatter 12 an den Setzeingang des FreigabeFlip-Flops 3 gelegt. Zur Synchronisation liegt Leitung 8 an allen drei NOR-Gattern 10, 11, 12.

Das Code-Flip-Flop 1 registriert Betriebsfälle, in welchen die extern eingegebenen Daten von den Referenzdaten abweichen und/oder in welchen ein Datenvergleich unter einer anderen als der Codespeicheradresse durchgeführt wird. Es wird anfänglich durch ein Signal POR (Power On Reset) zurückgesetzt, wobei es über das dritte NOR-Glied 12 den Setzeingang des Freigabe-Flip-Flops 3 freigibt.

Das Setzen des Code-Flip-Flops 1 ist abhängig vom Ausgangssignal des Komparators 4 und Codeadreßsignal C. Bei Gleichheit der am Komparator 4 anliegenden Daten liegt sein Ausgang auf log. 1, bei Ungleichheit auf log. 0. Eine gültige Codespeicheradresse wird durch log. 1 auf Leitung 7 angezeigt.

Das Code-Flip-Flop 1 wird also gesetzt, wenn beim Anliegen der Codeadresse im Bewertungszeitraum eine Ungleichheit der verglichenen Codedaten feststellbar ist. In diesem Fall wird das NOR-Gatter 12 blockiert, das heißt, das Freigabe Flip-Flop 3 kann nicht gesetzt werden.

Das Bit-Flip-Flop 2 registriert einen freien, unbeschriebenen Speicherplatz im Kontrollspeicher. Es wird zurückgesetzt bei jeder Adreßänderung durch ein Signal A und beim Auftreten des Signals POR. Es wird dagegen über einen Inverter gesetzt, wenn die auf Leitung 6 eingestellten, internen Daten $D_{int}$ als log. 1 erkannt werden, und wenn gleichzeitig der Kontrollspeicher adressiert ist (Kontrollsignal Z = log. 1). In diesem Fall ist der Eingang des NOR-Gatters 11 frei. Das Bit-Flip-Flop 2 wird also dadurch gesetzt, daß ein noch unbeschriebenes Bit im Kontrollspeicher erkannt wird.

Das Freigabe-Flip-Flop 3 hält fest, daß sowohl der Code-Daten-Vergleich mit einer Übereinstimmung beendet wurde, als auch, daß ein freies Bit im Kontrollspeicher beschrieben wurde und damit entwertet ist. Es wird zurückgesetzt und gesperrt durch das Signal POR, beispielsweise beim Einschalten der Versorgungsspannung. Dann sperrt durch einen log.0-Pegel das Freigabesignal F jede Operation bezüglich eines Anwenderbereichs (vergleiche Fig. 2). Das Freigabe-Flip-Flop 3 wird gesetzt, wenn der Q-Ausgang Q1 des Code-Flip-Flops 1 auf log. 0 steht und wenn der $\overline{Q}$ - Ausgang $\overline{Q2}$ des Bit-Flip-Flops 2 ebenfalls auf log. 0 steht, das heißt, wenn anfänglich ein freies Bit im Kontrollspeicher vorhanden war, und wenn Leitung 6 auf log. 0 steht, was bedeutet, daß ein freies Bit im Kontrollspeicher beschrieben wurde. Ist eine dieser Bedingungen nicht erfüllt oder wurde vor dem Schreiben des Kontrollspeichers die eingestellte· Speicheradresse geändert, so kann das Freigabe-Flip-Flop 3 nicht gesetzt werden.

In Fig. 2 ist die Anordnung I der Fig. 1 innerhalb eines Funktionsblockschaltbildes wiedergegeben, das ferner eine Zeit-und Ablaufsteuerung 16, einen Adreßzähler 20, einen Adreßdekoder 21 und einen nichtflüchtigen, löschbaren Speicher 17 umfaßt. Die Zeit-und Ablaufsteuerung 16 kann beispielsweise aus einem Mikroprozessor bestehen. Für den Speicher wird am besten eine E²PROM-Matrix verwendet.

Die Zeit-und Ablaufsteuerung wird auf bekannte Weise mit einem Systemtakt $\Phi$ und mit externen Daten $D_E$ beaufschlagt. Nach außen sind Daten $D_A$ abgreifbar. Steuerinformation S wird über mehrere Leitungen ausgetauscht. Die interne Verbindung zum Adreßzähler 20, Adreßdekoder 21 und Speicher 17 beruht ebenfalls auf den bekannten Verschaltungen beim Aufbau eines Mikrocomputers.

Der Speicher 17 ist in einen Codebereich 18 zur Aufnahme der Referenzdaten, in einen Zählerbereich 19 zur fortlaufenden Aufnahme von Zählbits und in einen zugriffkontrollierten Anwenderbereich 23 aufgeteilt. Die Adressierung erfolgt über den Adreßdekoder 21, über den mittels einer Vielzahl von Adreßleitungen die Adressen A an die Speicherplätze angelegt werden. Solange jedoch eine Freigabeprozedur nicht erfolgreich abgeschlossen ist, ist ein Zugriff zum Schreiben, Lesen, Löschen oder Vergleichen der im Anwenderbereich 23 abgelegten Daten nicht möglich.

Von den Adreßleitungen des Zählbereichs 19 auf der Leitung 9 wird das Kontrollsignal Z und von den Adreßleitungen des Codebereichs 18 das Code-Adreßsignal C auf der Leitung 7 abgeleitet. Dies kann unmittelbar oder über einen Dekoder - (nicht dargestellt) erfolgen. Wesentlich ist, daß bei jeder Adressierung des betreffenden Bereiches die zugehörige Leitung aktiviert wird.

Wenn die Speicheradresse geändert wird, wird an die Anordnung I das Signal ΔA ausgegeben. In dem wiedergegebenen Beispiel wird es vom Adreßzähler 20 abgeleitet.

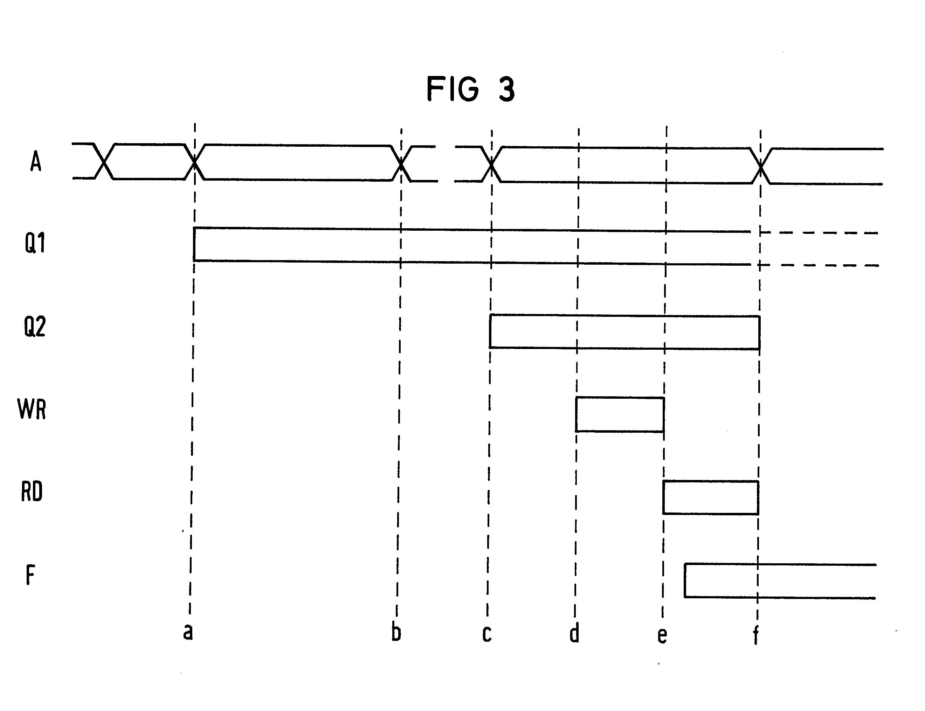

Anhand des in Fig. 3 schematisch veranschaulichten Zeitablaufs wird nunmehr zusammen mit Fig. 1 und 2 das Verfahren und die Funktion der Anordnung weiter erläutert. In der obersten Zeile des Diagramms ist der Verlauf der Adressen A am Eingang des Zähl-und des Codebereiches 19, 18 aufgetragen. Darunter sind die Signale Q1, $\overline{Q2}$ an den Ausgängen Q des Code-Flip-Flops 1 und des Bit-Flip-Flops 2 sowie das Freigabesignal F am Ausgang Q des Freigabe-Flip-Flops 3 wiedergegeben. Ferner sind schematisch eine Schreib- und zwei interne Leseoperationen WR, RD der Zeitund Ablaufsteuerung 16 dargestellt.

Zu Beginn sind alle Flip-Flops zurückgesetzt. Wenn die Signale der Speicheradresse A eingeschwungen sind (a), und der Codebereich 18 ist adressiert, bleibt das Code-Flip-Flop 1 zurückgesetzt. Ist nicht der Codebereich 18 adressiert, wird das Code-Flip-Flop 1 gesetzt - (gestrichelter Signalverlauf). Die Codebereich-Adressen werden unter Steuerung der Ablaufsteuerung 16 so oft angelegt, wie es zum bitweisen Vergleich der extern eingegebenen Daten $D_{ein}$ mit den Referenzdaten erforderlich ist. Ist der Datenvergleich positiv, bleibt das Code-Flip-Flop weiterhin zurückgesetzt. Bei negativem Ergebnis wird es gesetzt (strichpunktierter Signalverlauf) (b).

Anschließend wird die Adresse des Zählbereichs 19 angelegt und der Zählbereich 19 gelesen. Wird dabei eine freie Zählerstelle erkannt, wird das Zähl-Flip-Flop 2 gesetzt. In jedem anderen Fall, d.h. wenn die vorgegebene Zahl von Zugangsversuchen bereits erreicht ist, bleibt es zurückgesetzt (gestrichelte Linie) (c).

Als nächstes führt in dem wiedergegebenen Beispiel die Zeit-und Ablaufsteuerung 16 eine Programmierung des Zählers durch, in welcher der Zählerstand inkrementiert wird (d). Dies kann auch durch Zusammenwirken einer externen Steuerung mit einer internen Kontrollschaltung erfolgen (nicht dargestellt). Im vorliegenden Beispiel geschieht dies durch Schreiben einer log.1 in eine freie Speicherzelle des Zählerbereichs 19. Nach Ablauf dieser Schreiboperation WR wird der Zählerinhalt in einer weiteren Leseoperation RD daraufhin überprüft, ob die freie Zählerstelle tatsächlich beschrieben wurde (e). Während der Lese-und Schreiboperationen darf die Speicheradresse nicht geändert werden, da sonst das Bit-Flip-Flop 2 wieder zurückgesetzt wird. Sobald eine log. 0, die hier eine beschriebene Zählerstelle bedeutet, anliegt und das dritte NOR-Glied 12 freigegeben ist, wird das FreigabeFlip-Flop 3 gesetzt und das Freigabesignal F erzeugt (f).

Sobald das Freigabesignal F erzeugt ist und eingangsseitig an der Zeit-und Ablaufsteuerung 16 anliegt, wird von dieser der Zugriff auf den Anwenderbereich 23 freigegeben. Anschließend kann die Adresse des Anwenderbereichs 23 angelegt werden (g).

Falls ein Rücksetzen des Zählers möglich sein soll, so ist eine weitere Freigabeprozedur auszuführen. Diese wird in der oben beschriebenen Weise mit einer weiteren Anordnung durchgeführt, die der Anordnung I nach Fig. 1 entspricht. In einer Zusammenschaltung zweier derartiger Anordnungen wird zuerst mit einem zeiten Geheimcode ein erstes Freigabesignal erzeugt. Solange dieses nicht erzeugt ist, kann eine Löschoperation der Zeit-und Ablaufsteuerung 16 bezüglich des Zählbereichs 19 nicht durchgeführt werden.

## Ansprüche

1. Verfahren zum Durchführen einer Freigabeoperation für einen Anwenderspeicher, in welcher eine Freigabe einer Benutzerfunktion von einem vorhergehenden Datenvergleich von extern eingegebenen Daten mit in einem Codespeicher abgelegten Referenzdaten abhängig gemacht wird,

**dadurch gekennzeichnet,** daß vor jeder Freigabe eine fortlaufende Änderung des Inhalts eines Kontrollspeichers durchgeführt wird, und daß die Änderung durch einen Vergleich des anfänglichen Kontrollspeicherinhalts mit dem geänderten Kontrollspeicherinhalt überwacht wird.

2. Verfahren nach Anspruch 1, **gekennzeichnet** durch folgende Verfahrensschritte:

a) Vergleich der extern eingegebenen Daten mit im Codespeicher abgelegten Referenzdaten und Zwischenspeichern des Vergleichsergebnisses,

b) Überprüfung, ob der Inhalt des Kontrollspeichers zumindest an einem Speicherplatz unverändert ist, und ggfs.

c) Änderung des betreffenden Speicherplatzes,

d) Überprüfung, ob Speicherplatz geändert wurde, und

e) Erzeugen eines Freigabesignals (F), wenn alle Vergleiche bzw. Überprüfungen positiv beendet wurden.

3. Verfahren nach Anspruch 1 oder 2, **dadurch gekennzeichnet**, daß ein weiteres Freigabesignal zur Freigabe einer Löschoperation für den Kontrollspeicher in einem weiteren Freigabeverfahren erzeugt wird, und daß das weitere Freigabeverfahren mit den im Anspruch 1 oder 2 niedergelegten Verfahrensschritten unter Verwendung von weiteren Referenzdaten durchgeführt wird.

4. Anordnung zur Durchführung des Verfahrens nach Anspruch 1, **gekennzeichnet** durch

ein erstes log. Verknüpfungsglied (NOR-Gatter 10) für den Ausgang eines mit den extern eingegebenen Daten und den im Codespeicher abgelegten Referenzdaten beaufschlagten Komparators (4) und für eine betreffende Codespeicheradresse, ein zweites log. Verknüpfungsglied (NOR-Gatter 1l) für den Ausgang eines Kontrollspeichers und einer zugehörigen Adresse,

einen ersten und zweiten Zwischenspeicher (Code-Flip-Flop 1, Bit-Flip-Flop 2), die dem ersten bzw. zweiten Verknüpfungsglied nachgeschaltet sind, und

ein drittes log. Verknüpfungsglied (NOR-Glied 12) an welchem eingangsseitig der erste und zweite Zwischenspeicher und der Kontrollspeicher anliegen.

# FIG 1

# FIG 2

# FIG 3

0 214 390

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 044 039 (TRANSAC) * Zusammenfassung; Seite 1, Zeile 23 - Seite 2, Zeile 1 * | 1,2 | G 06 F 1/00<br>G 11 C 7/00 |
| Y | | 3 | |
| X | FR-A-2 471 000 (ELECTRONIQUE MARCEL DASSAULT) * Seite 2, Zeilen 16-38 * | 1,2 | |
| Y | | 3 | |
| X | US-A-4 211 919 (MICHEL UGON) * Spalte 1, Zeile 58 - Spalte 2, Zeile 23 * | 1,2 | |
| Y | | 3 | |
| X | FR-A-2 311 360 (SOCIETE INTERNATIONALE POUR L'INNOVATION) * Seite 3, Zeile 28 - Seite 4, Zeile 20 * | 1,2 | |
| Y | | 3 | |
| | --- -/- | | |

### RECHERCHIERTE SACHGEBIETE (Int. Cl.4)

G 06 F 1/00
G 11 C 7/00
G 11 C 17/00
G 06 K 19/06
G 07 F 7/10

Der vorliegende Recherchenbericht wurde für alle Patentansprüche erstellt.

| Recherchenort | Abschlußdatum der Recherche | Prüfer |
|---|---|---|
| DEN HAAG | 21-10-1986 | CERVANTES J.P.J. |

Europäisches
Patentamt

**EUROPÄISCHER RECHERCHENBERICHT**

Nummer der Anmeldung

EP 86 10 8767

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 503 423 (CLONIC SA) <br> * Seite 3, Zeilen 1-6; Seite 3, Zeile 24 - Seite 5, Zeile 12 * <br><br> --- | 3 | |
| D,A | EP-A-0 123 177 (SIEMENS) <br> * Zusammenfassung; Figuren 1,2 * <br><br> ----- | 1,4 | |

RECHERCHIERTE
SACHGEBIETE (Int. Cl.4)

Der vorliegende Recherchenbericht wurde für alle Patentansprüche erstellt.

| Recherchenort <br> DEN HAAG | Abschlußdatum der Recherche <br> 21-10-1986 | Prüfer <br> CERVANTES J.P.J. |
|---|---|---|